# EUROPEAN PATENT APPLICATION

(11) **EP 4 195 318 A1**
(43) Date of publication of application: **14.06.2023**
(21) Application number: 22750099.8
(22) Date of filing: 08.02.2022
(51) Int. Cl.: H01M 4/139, H01M 4/04, H01M 4/66, H01M 4/62, H01M 4/13, H01M 10/052, H01M 4/1397, H01M 4/02

(54) **ELECTRODE FOR ELECTROCHEMICAL DEVICE, METHOD FOR MANUFACTURING SAME, AND ELECTROCHEMICAL DEVICE COMPRISING SAME**

(30) Priority: 08.02.2021 KR 20210017773; 08.02.2021 KR 20210017774
(71) Applicant: Lg Chem, Ltd., Seoul 07336 (KR)
(72) Inventor: KIM, Min-Soo, Daejeon 34122 (KR); KIM, Su-Jin, Daejeon 34122 (KR); SEO, Jung-Hyun, Daejeon 34122 (KR); CHANG, Yeong-Rae, Daejeon 34122 (KR)
(74) Representative: Hoffmann Eitle
(86) International application number: PCT/KR2022/001938
(87) International publication number: WO 2022/169350

(57) **Abstract**

The present disclosure discloses a method for manufacturing an electrode for an electrochemical device comprising (S1) coating a slurry comprising a binder polymer and a conductive material on at least one surface of a current collector and drying to form an attachment enhancing layer; (S2) preparing a free-standing dry electrode film comprising a dry electrode active material and a dry binder; and (S3) stacking the free-standing dry electrode film on the attachment enhancing layer, and applying heat and pressure to allow the binder polymer to permeate into a surface layer of the free-standing dry electrode film in contact with the attachment enhancing layer to adhere the free-standing dry electrode film to the attachment enhancing layer

## Description

### TECHNICAL FIELD

The present disclosure relates to an electrode for an electrochemical device such as a lithium secondary battery, a method for manufacturing the same and an electrochemical device comprising the same.

The present application claims priority to Korean Patent Application No. 10-2021-0017773 filed on February 8, 2021 and Korean Patent Application No. 10-2021-0017774 filed on February 8, 2021, in the Republic of Korea, the disclosure of which is incorporated herein by reference.

### BACKGROUND ART

Electrochemical devices are widely used to supply power to useful systems, for example, storage systems, electromechanical systems and electrochemical systems. In particular, recently, with the widespread use of electronic devices using batteries, for example, mobile phones, laptop computers and electric vehicles, the demand for secondary batteries with small size, light weight and relatively high capacity is fast growing.

In general, an electrode for an electrochemical device such as a secondary battery is manufactured by a wet process including coating a slurry comprising an electrode active material and a binder on at least one surface of a current collector and drying a solvent. Due to the limited weight and thickness of the slurry that may be coated on the current collector in the manufacture of the electrode by the wet process, it is difficult to manufacture high capacity and high loading electrodes.

Accordingly, a method for forming a free-standing dry electrode film by a dry method without using a solvent has been proposed.

The free-standing dry electrode film is laminated with the current collector to manufacture an electrode, but since the manufactured electrode has weak adhesion strength between the dry electrode film and the current collector, the free-standing dry electrode film may be separated from the current collector in the electrochemical device assembly process.

Accordingly, there is a need for the development of electrodes with the improved adhesion strength of the free-standing dry electrode film on the current collector.

### DISCLOSURE

### Technical Problem

According to an embodiment of the present disclosure, the present disclosure is directed to providing a method for manufacturing an electrode for an electrochemical device with improved adhesion strength between a free-standing dry electrode film and a current collector.

According to an embodiment of the present disclosure, the present disclosure is further directed to providing a method for manufacturing an electrode for an electrochemical device with improved adhesion strength between a free-standing dry electrode film and a current collector and increased interfacial resistance.

According to another embodiment of the present disclosure, the present disclosure is further directed to providing an electrode for an electrochemical device with improved adhesion strength between a free-standing dry electrode film and a current collector.

According to another embodiment of the present disclosure, the present disclosure is further directed to providing an electrode for an electrochemical device with improved adhesion strength between a free-standing dry electrode film and a current collector and increased interfacial resistance.

According to still another embodiment of the present disclosure, the present disclosure is further directed to providing an electrochemical device comprising an electrode with improved adhesion strength between a free-standing dry electrode film and a current collector.

According to still another embodiment of the present disclosure, the present disclosure is further directed to providing an electrochemical device comprising an electrode with improved adhesion strength between a free-standing dry electrode film and a current collector and increased interfacial resistance.

### Technical Solution

In an aspect of the present disclosure, there is provided a method for manufacturing an electrode for an electrochemical device according to the following embodiments.

A first embodiment relates to the method for manufacturing an electrode for an electrochemical device comprising (S1) coating a slurry comprising a binder polymer and a conductive material on at least one surface of a current collector and drying to form an attachment enhancing layer; (S2) preparing a free-standing dry electrode film comprising a dry electrode active material and a dry binder; and (S3) stacking the free-standing dry electrode film on the attachment enhancing layer, and applying heat and pressure to allow the binder polymer to permeate into a surface layer of the free-standing dry electrode film in contact with the attachment enhancing layer to adhere the free-standing dry electrode film to the attachment enhancing layer.

A second embodiment relates to the method for manufacturing an electrode for an electrochemical device according to the first embodiment, wherein the slurry comprises a particulate binder polymer dispersed in the slurry.

A third embodiment relates to the method for manufacturing an electrode for an electrochemical device according to the first or second embodiment, wherein the binder polymer includes at least one selected from the group consisting of polytetrafluoroethylene, polyvinylidenefluoride, polyvinylalcohol, polynorbornene, polyacrylic acid, polymaleic acid, styrene-butadiene-rubber and a copolymer thereof, and the dry binder includes at least one selected from the group consisting of polytetrafluoroethylene, carboxymethylcellulose and polyvinylidenefluoride.

A fourth embodiment relates to the method for manufacturing an electrode for an electrochemical device according to any one of the first to third embodiments, wherein an amount of the conductive material in the slurry is 10 to 500 parts by weight based on 100 parts by weight of the binder polymer.

A fifth embodiment relates to the method for manufacturing an electrode for an electrochemical device according to any one of the first to fourth embodiments, wherein applying the heat in the step (S3) is performed in a temperature range between a melting point of the binder polymer of -60°C and a melting point of the binder polymer of +60°C.

A sixth embodiment relates to the method for manufacturing an electrode for an electrochemical device according to any one of the first to fifth embodiments, wherein the free-standing dry electrode film is 100 to 300 *µ*m in thickness (the thickness on one surface, not two surfaces), and the attachment enhancing layer is 200 to 1,000 nm in thickness (the thickness on one surface, not two surfaces).

A seventh embodiment relates to the method for manufacturing an electrode for an electrochemical device according to any one of the first to sixth embodiments, wherein the free-standing dry electrode film has an adhesion strength of 30 gf/2cm or more and an interfacial resistance of 2 Ωcm² or less.

An eighth embodiment relates to the method for manufacturing an electrode for an electrochemical device according to any one of the first to seventh embodiments, wherein the electrode for an electrochemical device is an electrode for a lithium secondary battery.

A ninth embodiment relates to the method for manufacturing an electrode for an electrochemical device according to any one of the first to eighth embodiments, wherein the current collector is made of aluminum, and the dry electrode active material is a dry positive electrode active material represented by the following Formula 1:

<Formula 1> Li₁₊ₐFe₁₋ₓMₓ(PO_{4-b})X_{b}

(M includes at least one selected from the group consisting of Al, Mg, Ni, Co, Mn, Ti, Ga, Cu, V, Nb, Zr, Ce, In, Zn and Y, and X includes at least one selected from the group consisting of F, S and N, -0.5 ≤ a ≤ +0.5, 0 ≤ x ≤0.5, 0 ≤ b ≤ 0.1)

In another aspect of the present disclosure, there is provided an electrode for an electrochemical device according to the following embodiments.

A tenth embodiment relates to the electrode for an electrochemical device comprising a current collector; an attachment enhancing layer comprising a binder polymer and a conductive material on at least one surface of the current collector; and a free-standing dry electrode film adhered to the attachment enhancing layer, the free-standing dry electrode film comprising a dry electrode active material and a dry binder, wherein the attachment enhancing layer and the free-standing dry electrode film are adhered by the binder polymer permeated into a surface layer of the free-standing dry electrode film.

An eleventh embodiment relates to the electrode for an electrochemical device according to the tenth embodiment, wherein the binder polymer includes at least one selected from the group consisting of polytetrafluoroethylene, polyvinylidenefluoride, polyvinylalcohol, polynorbornene, polyacrylic acid, polymaleic acid, styrene-butadiene-rubber and a copolymer thereof, and the dry binder includes at least one selected from the group consisting of polytetrafluoroethylene, carboxymethylcellulose and polyvinylidenefluoride.

A twelfth embodiment relates to the electrode for an electrochemical device according to the tenth or eleventh embodiment, wherein the conductive material is present in an amount of 10 to 500 parts by weight based on 100 parts by weight of the binder polymer.

A thirteenth embodiment relates to the electrode for an electrochemical device according to any one of the tenth to twelfth embodiments, wherein the free-standing dry electrode film is 100 to 300 *µ*m in thickness (the thickness on one surface, not two surfaces), and the attachment enhancing layer is 200 to 1000 nm in thickness (the thickness on one surface, not two surfaces).

A fourteenth embodiment relates to the electrode for an electrochemical device according to any one of the tenth to thirteenth embodiments, wherein the free-standing dry electrode film has an adhesion strength of 30 gf/2cm or more and an interfacial resistance of 2 Ωcm² or less.

A fifteenth embodiment relates to the electrode for an electrochemical device according to any one of the tenth to fourteenth embodiments, wherein the electrode for an electrochemical device is an electrode for a lithium secondary battery.

A sixteenth embodiment relates to the electrode for an electrochemical device according to any one of the tenth to fifteenth embodiments, wherein the current collector is made of aluminum, and the dry electrode active material is a dry positive electrode active material represented by the following Formula 1:

<Formula 1> Li₁₊ₐFe₁₋ₓMₓ(PO_{4-b})X_{b}

(M includes at least one selected from the group consisting of Al, Mg, Ni, Co, Mn, Ti, Ga, Cu, V, Nb, Zr, Ce, In, Zn and Y, and X includes at least one selected from the group consisting of F, S and N, -0.5 ≤ a ≤ +0.5, 0 ≤ x ≤0.5, 0 ≤ b ≤ 0.1)

A seventeenth embodiment provides an electrochemical device comprising the above-described electrode.

An eighteenth embodiment relates to the electrochemical device according to the seventeenth embodiment, wherein the electrochemical device is a lithium secondary battery.

### Advantageous Effects

According to an embodiment of the present disclosure, since the attachment enhancing layer is interposed between the current collector and the dry electrode film, and heat and pressure is applied to allow the binder polymer of the attachment enhancing layer to permeate into the surface layer of the free-standing dry electrode film in contact with the attachment enhancing layer to adhere the free-standing dry electrode film to the attachment enhancing layer, it is possible to increase the adhesion strength between the dry electrode film and the current collector.

### DESCRIPTION OF DRAWINGS

The accompanying drawings illustrate exemplary embodiments of the present disclosure, and together with the above description of the present disclosure, serve to help a further understanding of the technical aspects of the present disclosure, so the present disclosure should not be construed as being limited to the drawings. Meanwhile, the shape, size, scale or proportion of the elements in the accompanying drawings may be exaggerated to emphasize a more clear description.
FIG. 1 is a cross-sectional scanning electron microscope (SEM) image of an electrode of comparative example.
FIG. 2 is a cross-sectional SEM image of an electrode of example 1.

### BEST MODE

Hereinafter, the embodiments of the present disclosure will be described in detail. Prior to the description, it should be understood that the terms or words used in the specification and the appended claims should not be construed as limited to general and dictionary meanings, but interpreted based on the meanings and concepts corresponding to technical aspects of the present disclosure, on the basis of the principle that the inventor is allowed to define terms appropriately for the best explanation. Therefore, the disclosure of the embodiments described herein is just a most preferred embodiment of the present disclosure, but not intended to fully describe the technical aspects of the present disclosure, so it should be understood that a variety of other equivalents and modifications could have been made thereto at the time that the application was filed.

According to a method for manufacturing an electrode for an electrochemical device according to an aspect of the present disclosure, a slurry comprising a binder polymer and a conductive material is coated on at least one surface of a current collector and dried to form an attachment enhancing layer (step S1).

For example, the current collector may include a positive electrode current collector of stainless steel, aluminum, nickel, titanium, sintered carbon or aluminum or stainless steel treated with carbon, nickel, titanium or silver on the surface, or a negative electrode current collector of copper, stainless steel, aluminum, nickel, titanium, sintered carbon, copper or stainless steel treated with carbon, nickel, titanium or silver on the surface and an aluminum-cadmium alloy. In general, the current collector may be 3 to 500 *µ*m in thickness, and may have microtexture on the surface to improve the adhesion strength of the positive electrode active material. The current collector may come in various forms, for example, films, sheets, foils, nets, porous bodies, foams and non-woven fabrics.

The current collector, in particular, the positive electrode current collector may include aluminum. In general, aluminum is used in the form of a foil, but the aluminum foil is susceptible to oxidation in the air to form an aluminum oxide surface layer. Accordingly, the aluminum current collector should be interpreted as a current collector comprising an aluminum oxide surface layer formed by the oxidation of aluminum on the surface.

The binder polymer included in the slurry may be a polymer that softens into a flowable state by the application of heat and pressure, and the binder polymer may permeate into the surface layer of the free-standing dry film as described below to adhere the free-standing dry electrode film to the attachment enhancing layer. That is, the binder polymer, which is the component of the attachment enhancing layer, flows by the process of applying heat and pressure (i.e., a lamination process) as described below, and some of the binder polymer moves (permeates) into the surface and pores of the surface layer of the free-standing dry film. Accordingly, the adhesion strength between the current collector comprising the attachment enhancing layer and the free-standing dry film increases.

A mixture of at least two types of binder polymers may be used. For example, at least two types of binder polymers that are soluble in solvents may be used, a binder polymer that is soluble in solvents and a particulate binder polymer that is dispersible in solvents may be mixed together, and at least two types of particulate binder polymers that are dispersible in solvents may be mixed together. In particular, the binder polymer may comprise a particulate binder polymer that is dispersible in the slurry. Additionally, the particulate binder polymer may be used together with a binder polymer that is soluble in the slurry. In this instance, the binder polymer may comprise a thermoplastic polymer that softens into a flowable state by the application of heat and pressure, and a thermosetting polymer that is dissolved or dispersed in the slurry but does not soften or melt by the application of heat and pressure.

The binder polymer may include at least one selected from the group consisting of polytetrafluoroethylene, polyvinylidenefluoride, polyvinylalcohol, polynorbornene, polyacrylic acid, polymaleic acid, styrene-butadiene-rubber and a copolymer thereof, but is not limited thereto.

The conductive material may include, without limitation, any conductive material having conductive properties without causing side reaction with the other components of the electrochemical device, and may include, for example, graphite such as natural graphite or artificial graphite; carbon black such as carbon black (super-p), acetylene black, ketjen black, channel black, furnace black, lamp black, thermal black; conductive fibers such as carbon fibers or metal fibers; metal powder such as carbon fluoride, aluminum, nickel powder; conductive whiskers such as zinc oxide and potassium titanate; conductive metal oxide such as titanium oxide; and a conductive material such as polyphenylene derivatives.

The conductive material included in the slurry may be present in an amount of 10 to 500 parts by weight, and more particularly 10 to 300 parts by weight based on 100 parts by weight of the binder polymer, but is not limited thereto.

The attachment enhancing layer is formed on at least one surface of the current collector, that is, one surface or two surfaces of the current collector, and is a layer that is formed to increase the adhesion strength between the current collector and the free-standing dry electrode film as described below.

Meanwhile, in addition to the above-described components, the attachment enhancing layer forming slurry may further comprise any other additive, for example, a dispersant, without hindering the purpose of the present disclosure.

The method for coating the attachment enhancing layer on the current collector may use the common slurry coating method and device, and for example, a bar coating method such as Mayer bar coating, a gravure coating method, a 2 roll reverse coating method, a vacuum slot die coating method and a 2 roll coating method may be used.

Subsequently, a free-standing dry electrode film comprising a dry electrode active material and a dry binder is prepared (step S2). The preparation of the free-standing dry electrode film may be performed before the step (S1).

The method for forming the free-standing dry electrode film comprising the dry electrode active material and the dry binder is well-known in the corresponding technical field. Typically, a reference may be made to WO 2019/103874 and WO 2019/191397, the closures of which are incorporated herein by reference.

In the specification, the "free-standing" (self-supported)" electrode film is an electrode film comprising a binder matrix structure that maintains the shape without comprising a support. Commonly, and according to the method used, the electrode film is so strong that it can be used in the electrochemical device manufacturing process without any external support element such as a current collector or another film. For example, the "free-standing" electrode film may have sufficient strength that it can be rolled, stacked or unrolled in the electrode manufacturing process without any other support element. The electrode film described herein may be, for example, a positive electrode film or a negative electrode film.

As presented in the specification, the "dry" electrode film is an electrode film free of a detectable processing solvent, a processing solvent residue or a processing solvent impurity. That is, as opposed to wet electrode films, the "dry" electrode film described herein refers to an electrode film formed by a dry manufacturing process without using a solvent.

The dry manufacturing process refers to a process that does not completely or substantially use a solvent to form the electrode film. That is, the dry manufacturing process refers to a process of forming the electrode film using a mixture of the "dry" electrode active material and the "dry" binder, not a slurry using a solvent.

The dry electrode active material may be any known electrode active material. The at least one electrode active material may be a suitable material for the negative electrode or the positive electrode of the battery.

The negative electrode active material may include, for example, an insertion material (for example, carbon, graphite and/or graphene), an alloying/dealloying material (for example, silicon, silicon oxide, tin and/or tin oxide), a metal alloy or compound (for example, Si-Al and/or Si-Sn) and/or a conversion material (for example, manganese oxide, molybdenum oxide, nickel oxide and/or copper oxide). The negative electrode active material may be used alone or in combination to form a multi-phase material (for example, Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn and/or Sn-SiOx-SnOx).

The positive electrode active material may include, for example, metal oxide, metal sulfide or lithium metal oxide. The lithium metal oxide may include, for example, lithium nickel manganese cobalt oxide (NMC), lithium manganese oxide (LMO), lithium cobalt oxide (LCO), lithium titanate (LTO) and/or lithium nickel cobalt aluminum oxide (NCA). In some embodiments, the positive electrode active material may include, for example, layered transition metal oxide (for example, LiCoO₂ (LCO), Li(NiMnCo)O₂ (NMC) and/or LiNi_{0.8}Co_{0.15}Al_{0.05}O₂ (NCA)), spinel manganese oxide (for example, LiMn₂O₄ (LMO) and/or LiMn_{1.5}Ni_{0.5}O₄ (LMNO)), and in particular, the positive electrode active material represented by the following formula 1 may be used as the dry positive electrode active material in the present disclosure.

<Formula 1> Li₁₊ₐFe₁₋ₓMₓ(PO_{4-b})X_{b}

(M includes at least one selected from the group consisting of Al, Mg, Ni, Co, Mn, Ti, Ga, Cu, V, Nb, Zr, Ce, In, Zn and Y, and X includes at least one selected from the group consisting of F, S and N, -0.5 ≤ a ≤ +0.5, 0 ≤ x ≤0.5, 0 ≤ b ≤ 0.1)

The dry electrode film may comprise at least one carbon material. The carbon material may be selected from, for example, a graphite material, graphite, a graphene-containing material, hard carbon, soft carbon, carbon nanotubes, porous carbon, conductive carbon or a combination thereof. The graphite may be synthetically or naturally derived. The activated carbon may be derived from an evaporation process or an acid/etching process. In some embodiments, the graphite material may be a surface-treated material. In some embodiments, the porous carbon may comprise activated carbon. In some embodiments, the porous carbon comprise hierarchically structured carbon. In some embodiments, the porous carbon may comprise structured carbon nanotubes, structured carbon nanowires and/or structured carbon nanosheets. In some embodiments, the porous carbon may comprise graphene sheets. In some embodiments, the porous carbon may be surface-treated carbon.

The dry binder may include any binder used to form the dry electrode film, for example, the binder described in the above International Patent Publication, but is not limited thereto, and typically, the dry binder may include at least one selected from the group consisting of polytetrafluoroethylene, carboxymethylcellulose and polyvinylidenefluoride.

In some embodiments, the positive electrode film may comprise the at least one active material of about 70 weight% to about 98 weight%, comprising about 70 weight% to about 92 weight%, or about 70 weight% to about 96 weight%. In some embodiments, the positive electrode film may comprise the porous carbon material of about 10 weight% or less, comprising about 5 weight% or less, or about 1 weight% to about 5 weight%. In some embodiments, the positive electrode film may comprise the conductive additive of about 5 weight% or less, comprising about 1 weight% to about 3 weight%. In some embodiments, the positive electrode film comprises the binder of about 20 weight% or less, for example, the dry binder of about 1.5 weight% to 10 weight%, about 1.5 weight% to 5 weight%, or about 1.5 weight% to 3 weight%.

In some embodiments, the negative electrode film may comprise at least one active material, a binder and optionally, a conductive additive. In some embodiments, the conductive additive may comprise a conductive carbon additive such as carbon black. In some embodiments, the at least one active material of the negative electrode may comprise synthetic graphite, natural graphite, hard carbon, soft carbon, graphene, mesoporous carbon, silicon, silicon oxide, tin, tin oxide, germanium, lithium titanate, a mixture thereof, or a composite of the above-described materials. In some embodiments, the negative electrode film may comprise the at least one active material of about 80 weight% to about 98 weight%, comprising about 80 weight% to about 98 weight%, or about 94 weight% to about 97 weight%. In some embodiments, the negative electrode film comprises the conductive additive of about 5 weight% or less, comprising about 1 weight% to about 3 weight%. In some embodiments, the negative electrode film comprises the dry binder of about 20 weight% or less, comprising about 1.5 weight% to 10 weight%, about 1.5 weight% to 5 weight%, or about 3 weight% to 5 weight%. In some embodiments, the negative electrode film comprises the dry binder of about 4 weight%. In some embodiments, the negative electrode film may not comprise the conductive additive.

The prepared free-standing dry electrode film is stacked on the attachment enhancing layer formed on the current collector according to the step (S1), and heat and pressure is applied to allow the binder polymer to permeate into the surface layer of the free-standing dry electrode film in contact with the attachment enhancing layer to adhere the free-standing dry electrode film to the attachment enhancing layer (step S3).

As described above, the binder polymer included in the attachment enhancing layer comprises the polymer that softens into a flowable state by the application of heat and pressure, for example, the thermoplastic polymer, and for example, the polymer may be heated at higher temperatures than the glass transition temperature of the binder polymer in the temperature range between the binder polymer melting point Tm of - 60°C and the binder polymer melting point Tm of + 60°C, more particularly the temperature range between the binder polymer melting point Tm of - 50°C and the binder polymer melting point Tm of + 50°C, and even more particularly the temperature range between the binder polymer melting point Tm of - 40°C and the binder polymer melting point Tm of + 40°C. For the smooth flow of the binder polymer, the heating may be performed at the temperature that is close to or higher than the melting point of the binder polymer. In the lamination process under heat and pressure, the binder polymer of the attachment enhancing layer flows by heat and permeates into the surface layer of the free-standing dry electrode film in contact with the attachment enhancing layer, thereby increasing the adhesion strength between the attachment enhancing layer and the free-standing dry electrode film. In this instance, the binder polymer of the attachment enhancing layer and the dry binder of the free-standing dry electrode film may include the same binder or different binders, but it is desirable to use the dry binder having a higher melting point than the binder polymer of the attachment enhancing layer to maintain the shape stability of the free-standing dry electrode film itself.

An electrode for an electrochemical device according to an embodiment manufactured by the above-described manufacturing method comprises:
a current collector;
an attachment enhancing layer comprising a binder polymer and a conductive material on at least one surface of the current collector; and
a free-standing dry electrode film adhered to the attachment enhancing layer, the free-standing dry electrode film comprising a dry electrode active material and a dry binder,
wherein the attachment enhancing layer and the free-standing dry electrode film are adhered by the binder polymer permeated into the surface layer of the free-standing dry electrode film.

The constituent components of the current collector, the attachment enhancing layer and the free-standing dry electrode film are the same as described above.

The thickness of the free-standing dry electrode film stacked on one surface of the attachment enhancing layer may be 100 to 300 *µ*m, and the thickness of the attachment enhancing layer formed on one surface of the current collector may be 200 to 1,000 nm. Additionally, the adhesion strength of the free-standing dry electrode film may be 30 gf/2cm or more (more particularly, 40 gf/2cm or more), and the interfacial resistance may be 2 Ωcm² or less, but is not limited thereto.

The electrode may be used as an electrode for an electrochemical device such as a lithium secondary battery. The lithium secondary battery comprising the above-described electrode will be described.

Specifically, the lithium secondary battery comprises an electrode, a positive electrode and a negative electrode opposite the positive electrode, and a separator and an electrolyte interposed between the positive electrode and the negative electrode, and at least one of the positive electrode or the negative electrode includes the electrode described above.

When the electrode of the lithium secondary battery, i.e., the positive electrode or the negative electrode, includes the above-described electrode, the opposite electrode may include the commonly used electrode. Additionally, the lithium secondary battery may further include a battery container accommodating an electrode assembly comprising the positive electrode, the negative electrode and the separator, and a sealing member to seal the battery container.

In the lithium secondary battery, the separator separates the negative electrode from the positive electrode and provides a passage for movement of lithium ions, and may include, without limitation, any separator commonly used in lithium secondary batteries, and in particular, preferably the separator may have low resistance to the electrolyte ion movement and good electrolyte solution wettability. Specifically, the separator may include, for example, a porous polymer film made of polyolefin-based polymer such as ethylene homopolymer, propylene homopolymer, ethylene/butene copolymer, ethylene/hexene copolymer and ethylene/methacrylate copolymer or a stack structure of two or more porous polymer films. Additionally, the separator may include common porous non-woven fabrics, for example, non-woven fabrics made of high melting point glass fibers and polyethylene terephthalate fibers. Additionally, to ensure the heat resistance or mechanical strength, the coated separator comprising ceramics or polymer materials may be used, and may be selectively used with a single layer or multilayer structure.

Additionally, the electrolyte may include an organic liquid electrolyte, an inorganic liquid electrolyte, a solid polymer electrolyte, a gel polymer electrolyte, a solid inorganic electrolyte and a molten inorganic electrolyte, available in the manufacture of lithium secondary battery, but is not limited thereto.

Specifically, the electrolyte may comprise an organic solvent and a lithium salt.

The organic solvent may include, without limitation, any type of organic solvent that acts as a medium for the movement of ions involved in the electrochemical reaction of the battery. Specifically, the organic solvent may include an ester-based solvent, for example, methyl acetate, ethyl acetate, γ-butyrolactone, ε-caprolactone; an ether-based solvent, for example, dibutyl ether or tetrahydrofuran; a ketone-based solvent, for example, cyclohexanone; an aromatic hydrocarbon-based solvent, for example, benzene, fluorobenzene; a carbonate-based solvent, for example, dimethylcarbonate (DMC), diethylcarbonate (DEC), methylethylcarbonate (MEC), ethylmethylcarbonate (EMC), ethylene carbonate (EC), propylene carbonate (PC); an alcohol-based solvent, for example, ethylalcohol, isopropyl alcohol; nitriles of R-CN (R is C2 to C20 straight-chain, branched-chain or cyclic hydrocarbon, and may comprise an exocyclic double bond or ether bond); amides, for example, dimethylformamide; dioxolanes, for example, 1,3-dioxolane; or sulfolanes. Among them, the carbonate-based solvent is desirable, and more preferably, cyclic carbonate (for example, ethylene carbonate or propylene carbonate) having high ionic conductivity and high dielectric constant which contributes to the improved charge/discharge performance of the battery may be mixed with a linear carbonate-based compound (for example, ethylmethyl carbonate, dimethyl carbonate or diethyl carbonate) of low viscosity. In this case, the cyclic carbonate and the chain carbonate may be mixed at a volume ratio of about 1:1 to about 1:9 to improve the performance of the electrolyte solution.

The lithium salt may include, without limitation, any compound that can provide lithium ions used in the lithium secondary battery. Specifically, the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt may range from 0.1 to 2.0M. When the concentration of the lithium salt is included in the above-described range, the electrolyte has the optimal conductivity and viscosity, resulting in good performance of the electrolyte and effective movement of lithium ions.

In addition to the above-described constituent substances of the electrolyte, the electrolyte may further comprise, for example, at least one type of additive of a haloalkylene carbonate-based compound such as difluoro ethylene carbonate, pyridine, triethylphosphite, triethanolamine, cyclic ether, ethylene diamine, n-glyme, hexaphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride to improve the life characteristics of the battery, prevent the capacity fading of the battery and improve the discharge capacity of the battery. In this instance, the additive may be included in an amount of 0.1 to 5 weight% based on the total weight of the electrolyte.

The lithium secondary battery comprising the electrode according to the present disclosure is useful in the field of mobile devices including mobile phones, laptop computers and digital cameras, and electric vehicles including hybrid electric vehicles (HEVs).

Hereinafter, the embodiments of the present disclosure will be described in sufficiently detail for those having ordinary skill in the technical field pertaining to the present disclosure to easily practice the present disclosure. However, the present disclosure may be embodied in many different forms and is not limited to the disclosed embodiments.

### [Preparation of attachment enhancing layer forming slurry]

Binder 1: An aqueous solution product (XPH-883, Solvay) in which poly(vinylidene-hexafluoropropylene) particulate polymer (melting point of about 100°C) having the average particle size of 250 nm comprising PVDF and HFP at a ratio of 3:1 is dispersed at the concentration of 20 weight% is diluted with water at the concentration of 10 weight%.

Binder 2: An aqueous solution product (XPH-838, Solvay) in which polyvinylidenefluoride particulate polymer (melting point of about 160°C) having the average particle size of 250 nm is dispersed at the concentration of 20 weight% is diluted with water at the concentration of 10 weight%.

Binder 3: An aqueous solution product (XPH-883, Solvay) in which poly(vinylidene-hexafluoropropylene) particulate polymer (melting point of about 100°C) having the average particle size of 250 nm comprising PVDF and HFP at a ratio of 3:1 is dispersed at the concentration of 20 weight% is diluted with water at the concentration of 25 weight%.

CMC thickening agent solution: 1.5 weight% of Daicel's CMC product Grade 2200 is dissolved in water.

SBR dispersion: Styrene-butadiene-rubber particulate polymer having the average particle size of 200 nm is diluted with water at the concentration of 20 weight%.

Conductive material 1: Carbon black having the average particle size of 1 *µ*m is dispersed in water at the concentration of 10 weight% to prepare a dispersion. The dispersion comprises 1 weight% of a polyvinylalcohol dispersant based on the weight of the carbon black.

Conductive material 2: Carbon nanotubes (Product Name: BT, LG chem.) and CMC are mixed at a weight ratio of 10:1 and the mixture is dispersed in water at the concentration of 0.4 weight%.

These components are mixed at a composition ratio (a weight ratio) according to the following Table 1 to prepare an attachment enhancing layer forming slurry.

**[Table 1]**

| | Prep arati on exa mple 1 | Prep arati on exa mple 2 | Prep arati on exa mple 3 | Prep arati on exa mple 4 | Prep arati on exa mple 5 | prep arati on exa mple 6 | prep arati on exa mple 7 | prep arati on exa mple 8 | prep arati on exa mple 9 | Com parat ive prep arati on exa mple 1 | Com parat ive prep arati on exa mple 2 | Com parat ive prep arati on exa mple 3 |
|---|---|---|---|---|---|---|---|---|---|---|---|---|
| Bi nd er1 | 32.3 3 | - | 26.0 3 | 22.0 0 | 37.4 7 | | | | | - | - | - |
| Bi nd er2 | - | 31.0 9 | - | - | - | | | | | - | - | - |
| Bi nd er3 | | | | | | 11.8 6 | 13.8 1 | 10.6 6 | 15.1 2 | | | |
| C M C thi ck eni ng ag ent sol uti on | 42.1 2 | 42.0 8 | 45.1 2 | 43.9 0 | 22.9 4 | 15.8 1 | 21.6 1 | 14.2 1 | - | - | - | - |
| SB R dis per sio n | | | | | | - | - | - | - | 38.4 6 | - | - |
| Co nd uct ive materi al1 | 6.29 | 7.62 | 10.5 9 | 22.0 0 | 16.0 5 | 29.6 4 | 32.4 2 | 11.4 2 | 15.4 3 | - | 50.5 0 | - |
| Co nd uct ive ma teri al2 | - | - | - | - | - | - | - | - | - | - | - | 74.0 7 |
| W ate r | - | - | 2.22 | - | - | 29.6 4 | 16.6 7 | 39.7 2 | 53.6 7 | 30.7 7 | 24.7 5 | - |
| Et hyl alc oh ol | - | - | - | 12.1 0 | 23.5 4 | - | - | - | - | 15.3 8 | 24.7 5 | 12.9 6 |
| Iso pro pyl alc oh ol | 19.2 6 | 19.2 1 | 16.0 4 | | | 13.0 4 | 15.4 9 | 23.9 9 | 15.7 8 | 15.3 8 | - | 12.9 6 |
| To tal | 100. 00 | 100. 00 | 100. 00 | 100. 00 | 100. 00 | 100. 00 | 100. 00 | 100. 00 | 100. 00 | 100. 00 | 100. 00 | 100. 00 |

### <Example 1>

An attachment enhancing layer is formed on a current collector using the attachment enhancing layer forming slurry of preparation example 1 described in the above Table 1. The attachment enhancing layer forming slurry is coated on one surface of an aluminum foil having the thickness of 20 *µ*m and dried at 140°C for 3 min to form the attachment enhancing layer on the aluminum foil. Subsequently, another attachment enhancing layer having the same thickness is formed on the opposite surface of the aluminum foil by the same method.

Meanwhile, a free-standing dry electrode (positive electrode) film is prepared as below.

94 weight% of lithium ion phosphate (LFP) having the primary particle size of about 1 ,urn, 3 weight% of a conductive material (carbon black from Denka) and 3 weight% of a dry binder (polytetrafluoroethylene (PTFE) are put into a jet mill and mixed for 1 hour, and then the agglomerated electrode material is milled using the mill. After the distance between rolls of a press is increased to a target thickness, the ground electrode material is allowed to pass through the rolls a few times to form the free-standing dry electrode film.

The free-standing dry electrode film is stacked on "the attachment enhancing layer formed on the two surfaces of the aluminum current collector" as prepared above, and lamination is performed by applying heat and pressure (high pressure roll press) under the condition described in the following Table 2.

The condition for preparing the electrode and the attachment enhancing layer and the rolling condition of the prepared electrode are shown in the following Table 2.

### <Examples 2-9>

An electrode is prepared by the same process as example 1 except that the attachment enhancing layer forming slurry is changed to the condition described in the following Table 2.

### <Comparative examples 1-3>

An electrode is prepared by the same process as example 1 except that the attachment enhancing layer forming slurry is changed to the condition described in the following Table 2.

### <Comparative example 4>

An electrode is prepared by the same process as example 1 except that the attachment enhancing layer is not formed.

### <Evaluation of adhesion strength>

The adhesion strength is evaluated using Texture Analyzer (XT plusC Texture Analyzer, Stable Micro Systems). A sample holder is installed in a 90° Peel Test measurement mode and a 5 kg jig is connected. After the electrode sample is cut into 20 mm (width) and 120 mm (length) size, a double-sided tape is attached to one surface of a slide glass of 25 mm (width) and 70 mm (length), and a protection tape is removed. The electrode sample is placed such that the end of the short side of the slide glass and the short side of the electrode sample match, the double-sided tape and one surface of the electrode sample are adhered. In this instance, the electrode sample attached to the other short side of the slide glass is slightly peeled off about 5 mm from the two sides. The sample is fixed to a TA sample base such that the glass surface of the slide glass having no electrode sample faces the bottom, and the end of the electrode sample not attached to the double-sided tape is fixed to the TA sample holder with the electrode sample vertically standing with the slide glass. In this instance, the sample is re-fixed after horizontally adjusting the position such that the angle of the electrode sample standing vertically is maintained at 90°. The sample measurement mode is set to the 90° Peel Test mode to measure in a reciprocating manner, the peel-off speed of the electrode is set to 100 mm/min, the measurement length is set to 50 mm, and the return speed to the original position after the measurement is set to 300 mm/min.

After the measurement is completed, the adhesion strength measured over time is represented in the form of a graph. An average of forces at 10 to 20 seconds during which the adhesion strength is measured is calculated, an average of forces of the return to the original position is calculated and a difference between the two averages is calculated as adhesion strength. An average of adhesion strength and standard deviation are calculated using the measurements of 5 samples in each experiment.

### <Evaluation of interfacial resistance>

The interfacial resistance is measured using MP Tester (XF-057, Japan Hioki E.E. Corporation analyzer). The one-sided or two-sided electrode sample is cut into 5cm X 5cm size, and its thickness is measured to determine the thickness of the electrode layer. In the case of the two-sided sample, under the assumption that the two electrodes have the equal thickness, half of a value obtained by subtracting the thickness of the current collector from the total thickness is taken as the electrode thickness. The current collector thickness is only taken from the thickness of the current collector except the thickness of the attachment enhancing layer. After a measurement program runs, Current value (positive electrode 100uA, negative electrode 10mA), Speed (Slow), Voltage Range (0.5V), the current collector resistance (aluminum current collector 2.82×10⁻⁶, copper current collector 1.68×10⁻⁶) value are inputted. In the Option menu, Max Iteration number is set to 30. The electrode sample is placed on a sample measurement unit such that the electrode surface to be measured faces upwards. The electrode thickness and the current collector thickness previously measured are inputted, and when Start is pressed down, measurement starts. After the measurement, the electrode resistance (unit Qcm) and the interfacial resistance (Ωcm²) displayed on a monitor are recorded. 3 measurements are made and an average of them is calculated.

### <Evaluation of attachment enhancing layer thickness>

The thickness of the attachment enhancing layer is determined by SEM analysis of a cross section sample without directly measuring the thickness of the foil. Since the thickness of the attachment enhancing layer changes in the process of high temperature high pressure lamination with the dry electrode, the cross section sample is prepared and used to determine the thickness. The SEM equipment for cross section analysis is Hitachi's FESEM. The thickness is measured at 5 locations at which the attachment enhancing layer forms a flat layer between the electrode and the current collector in cross section, and an average is calculated and rounded off in 50 nm units.

**[Table 2]**

| | Ex am ple 1 | Ex am ple 2 | Ex am ple 3 | Ex am ple 4 | Ex am ple 5 | Ex am ple 6 | Ex am ple 7 | Ex am ple 8 | Ex am ple 9 | Co mp arat ive exa mp le 1 | Co mp arat ive exa mp le 2 | Co mp arat ive exa mp le 3 | Co mp arat ive exa mp le 4 |
|---|---|---|---|---|---|---|---|---|---|---|---|---|---|
| Attach ment enhan cing layer formi ng slurry | Pre par atio n exa mp le 1 | Pre par atio n exa mp le 2 | Pre par atio n exa mp le 3 | Pre par atio n exa mp le 4 | Pre par atio n exa mp le 5 | Pre par atio n exa mp le 6 | Pre par atio n exa mp le 7 | Pre par atio n exa mp le 8 | Pre par atio n exa mp le 9 | Co mp arat ive pre par atio n exa mple 1 | Co mp arat ive pre par atio n exa mple 2 | Co mp arat ive pre par atio n exa mple 3 | No n-use |
| Thick ness of attach ment enhan cing layer (one surfac e) (nm) | 300 | 400 | 350 | 500 | 300 | 300 | 400 | 400 | 600 | 350 | 400 | 300 | - |
| Electr ode thickn ess (*µ*m) | 159 | 188 | 161 | 162 | 167 | 160 .5 | 151 | 154 | 142 | 174 | 157 | 155 | 151 |
| Rollin g tempe rature( °C) | 120 | 150 | 120 | 120 | 150 | 120 | 120 | 120 | 120 | 150 | 120 | 120 | 150 |
| Interfa cial resista nce(Ω cm²) | 1.7 | 0.5 | 0.6 | 0.7 | 1.5 | 0.5 6 | 0.4 1 | 0.5 3 | 0.6 7 | 21 | 1.4 | 0.1 9 | 11. 9 |
| Adhes ion streng th(gf/ 2cm) | 83. 7 | 49. 6 | 61. 8 | 49. 3 | 65. 0 | 35. 30 | 41. 70 | 45. 90 | 37. 20 | 81 | 2 | 6.2 | 27. 5 |

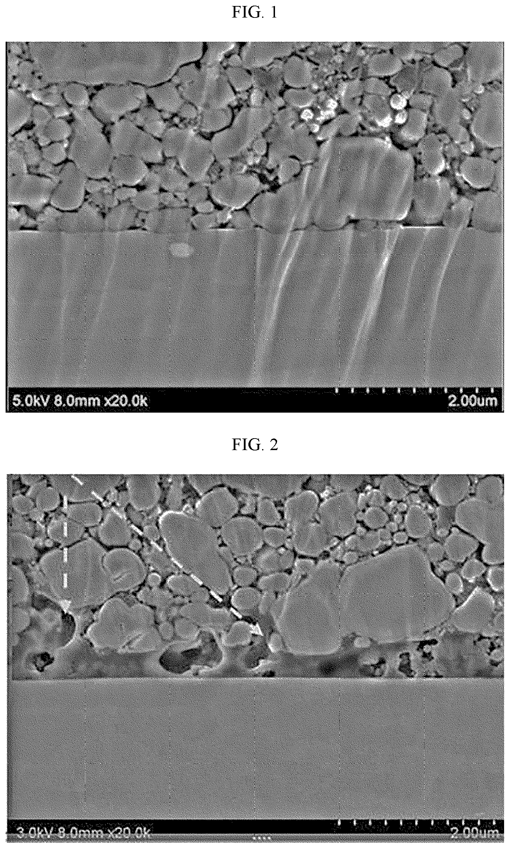

FIG. 1 is a cross-sectional scanning electron microscope (SEM) image of the electrode of comparative example 4 without the attachment enhancing layer, and FIG. 2 is a cross-sectional SEM image of the electrode of example 1. According to FIG. 2, it can be seen that with the increasing contact surface by the permeation of some of the binder polymer of the attachment enhancing layer into the surface layer of the free-standing dry electrode film as indicated by the arrow, the adhesion strength between the attachment enhancing layer and the free-standing dry electrode film increases.

Additionally, referring to the results of Table 2, it can be seen that compared to the electrodes of comparative examples, the electrodes of examples 1 to 9 prepared according to the present disclosure have the improved interfacial resistance and adhesion strength.

## Claims

1. A method for manufacturing an electrode for an electrochemical device, comprising:
(S1) coating a slurry comprising a binder polymer and a conductive material on at least one surface of a current collector and drying to form an attachment enhancing layer;
(S2) preparing a free-standing dry electrode film comprising a dry electrode active material and a dry binder; and
(S3) stacking the free-standing dry electrode film on the attachment enhancing layer, and applying heat and pressure to allow the binder polymer to permeate into a surface layer of the free-standing dry electrode film in contact with the attachment enhancing layer to adhere the free-standing dry electrode film to the attachment enhancing layer.

2. The method for manufacturing an electrode for an electrochemical device according to claim 1, wherein the slurry comprises a particulate binder polymer dispersed in the slurry.

3. The method for manufacturing an electrode for an electrochemical device according to claim 1, wherein the binder polymer includes at least one selected from the group consisting of polytetrafluoroethylene, polyvinylidenefluoride, polyvinylalcohol, polynorbornene, polyacrylic acid, polymaleic acid, styrene-butadiene-rubber and a copolymer thereof, and the dry binder includes at least one selected from the group consisting of polytetrafluoroethylene, carboxymethylcellulose and polyvinylidenefluoride.

4. The method for manufacturing an electrode for an electrochemical device according to claim 1, wherein an amount of the conductive material in the slurry is 10 to 500 parts by weight based on 100 parts by weight of the binder polymer.

5. The method for manufacturing an electrode for an electrochemical device according to claim 1, wherein applying the heat in the step (S3) is performed in a temperature range between a melting point of the binder polymer of -60°C and a melting point of the binder polymer of +60°C.

6. The method for manufacturing an electrode for an electrochemical device according to claim 1, wherein the free-standing dry electrode film stacked on one surface of the attachment enhancing layer is 100 to 300 *µ*m in thickness, and the attachment enhancing layer formed on one surface of the current collector is 200 to 1,000 nm in thickness.

7. The method for manufacturing an electrode for an electrochemical device according to claim 1, wherein the free-standing dry electrode film has an adhesion strength of 30 gf/2cm or more and an interfacial resistance of 2 Ωcm² or less.

8. The method for manufacturing an electrode for an electrochemical device according to claim 1, wherein the electrode for an electrochemical device is an electrode for a lithium secondary battery.

9. The method for manufacturing an electrode for an electrochemical device according to claim 8, wherein the current collector is made of aluminum, and the dry electrode active material is a dry positive electrode active material represented by the following Formula 1:
<Formula 1> Li₁₊ₐFe₁₋ₓMₓ(PO_{4-b})X_{b}
(M includes at least one selected from the group consisting of Al, Mg, Ni, Co, Mn, Ti, Ga, Cu, V, Nb, Zr, Ce, In, Zn and Y, and X includes at least one selected from the group consisting of F, S and N, -0.5 ≤ a ≤ +0.5, 0 ≤ x ≤0.5, 0 ≤ b ≤ 0.1)

10. An electrode for an electrochemical device, comprising:
a current collector;
an attachment enhancing layer comprising a binder polymer and a conductive material on at least one surface of the current collector; and
a free-standing dry electrode film adhered to the attachment enhancing layer, the free-standing dry electrode film comprising a dry electrode active material and a dry binder,
wherein the attachment enhancing layer and the free-standing dry electrode film are adhered by the binder polymer permeated into a surface layer of the free-standing dry electrode film.

11. The electrode for an electrochemical device according to claim 10, wherein the binder polymer includes at least one selected from the group consisting of polytetrafluoroethylene, polyvinylidenefluoride, polyvinylalcohol, polynorbornene, polyacrylic acid, polymaleic acid, styrene-butadiene-rubber and a copolymer thereof, and the dry binder includes at least one selected from the group consisting of polytetrafluoroethylene, carboxymethylcellulose and polyvinylidenefluoride.

12. The electrode for an electrochemical device according to claim 10, wherein the conductive material is present in an amount of 10 to 500 parts by weight based on 100 parts by weight of the binder polymer.

13. The electrode for an electrochemical device according to claim 10, wherein the free-standing dry electrode film stacked on one surface of the attachment enhancing layer is 100 to 300 *µ*m in thickness, and the attachment enhancing layer formed on one surface of the current collector is 200 to 1,000 nm in thickness.

14. The electrode for an electrochemical device according to claim 10, wherein the free-standing dry electrode film has an adhesion strength of 30 gf/2cm or more and an interfacial resistance of 2 Ωcm² or less.

15. The electrode for an electrochemical device according to claim 10, wherein the electrode for an electrochemical device is an electrode for a lithium secondary battery.

16. The electrode for an electrochemical device according to claim 10, wherein the current collector is made of aluminum, and the dry electrode active material is a dry positive electrode active material represented by the following Formula 1:
<Formula 1> Li₁₊ₐFe₁₋ₓMₓ(PO_{4-b})X_{b}
(M includes at least one selected from the group consisting of Al, Mg, Ni, Co, Mn, Ti, Ga, Cu, V, Nb, Zr, Ce, In, Zn and Y, and X includes at least one selected from the group consisting of F, S and N, -0.5 ≤ a ≤ +0.5, 0 ≤ x ≤0.5, 0 ≤ b ≤ 0.1)

17. An electrochemical device comprising the electrode according to any one of claims 10 to 16.

18. The electrochemical device according to claim 17, wherein the electrochemical device is a lithium secondary battery.
